(19) Europäisches Patentamt

European Patent Office

Office européen des brevets

(11) Publication number: **0 483 967 A2**

## EUROPEAN PATENT APPLICATION

(21) Application number: **91308651.8**

(22) Date of filing: **24.09.91**

(51) Int. Cl.⁵: **G06F 9/30, G06F 9/38**

(30) Priority: **29.10.90 US 605556**

(43) Date of publication of application:
**06.05.92 Bulletin 92/19**

(84) Designated Contracting States:
**DE FR GB IT SE**

(71) Applicant: SUN MICROSYSTEMS, INC.
2550 Garcia Avenue
Mountain View, CA 94043(US)

(72) Inventor: Cmelik, Robert
1024 Chula Vista Terrace
Sunnyvale, California 94086(US)
Inventor: Kong, Shing
P.O. Box 391379
Mountain View, California 94039(US)
Inventor: Kelly, Edmund
5277 Rio Grande Drive
San Jose, California 95136(US)

(74) Representative: Wombwell, Francis
Potts, Kerr & Co. 15, Hamilton Square
Birkenhead Merseyside L41 6BR(GB)

(54) **Apparatus for increasing the number of registers available in a computer processor.**

(57) A floating point processor including a first plurality of registers, each of the registers of the first plurality of registers containing a number of bit positions at least sufficient to store one single precision number, the registers of the first plurality of registers being addressable in storing single precision numbers by sequentially numbered addresses and being addressable in storing double precision numbers by alternate ones of the sequential numbers used in storing single precision numbers; and a second plurality of registers, each of the registers of the second plurality of registers containing a number of bit positions at least sufficient to store one single precision number, the registers of the second plurality of registers being addressable in pairs in storing double precision numbers by those alternate ones of the sequential numbers used in storing single precision numbers omitted in addressing the registers of the first plurality of registers.

## BACKGROUND OF THE INVENTION

### 1. Field of the Invention:

This invention relates to computer processors and, more particularly, to apparatus for addressing the registers in computer processors to increase the number of available registers.

### 2. History of the Prior Art:

Computer processors are comprised of registers and arithmetic and logic units. Values are placed in the registers and manipulated by an arithmetic and logic unit in accordance with instructions placed in other registers in order to reach a result. For example, in a computer based on the Scalable Processor Architecture (SPARC) designed by Sun Microsystems, Inc., Mountain View, California, an instruction word may command the device to take an amount stored in a first register, add it to an amount stored in a second register, and place the result in a third register.

Floating point processors are processors especially adapted to handle arithmetic functions and include floating point registers of a number and size best adapted to handle this particular form of arithmetic. In the SPARC architecture, a floating-point processor includes thirty-two individual registers each capable of holding the thirty-two bits of one single-precision operand. A single precision operand includes the normal number of bit positions used by a computer in accomplishing its arithmetic functions. To attain more precision in its arithmetic manipulations, a floating point processor may use the thirty-two registers in pairs to store sixteen double precision numbers or in quadruples to hold eight quadruple precision numbers. A computer processor might also extend its precision by handling octuple precision numbers and greater in a similar manner.

The number of registers is a factor in determining the speed of operation of a processor because the time required to store and restore data when registers are not available to an operation is very substantial. For this reason it is desirable to increase the number of registers which may be used by a floating point processor.

## SUMMARY OF THE INVENTION

It is, therefore, an object of the present invention to increase the number of high precision registers used for mathematical manipulations which a computer may address.

It is another more specific object of the present invention to increase the number of double precision and quadruple precision floating point registers which a computer may address.

These and other objects of the present invention are realized in a floating point processor comprising a first plurality of registers, each of the registers of the first plurality of registers containing a number of bit positions at least sufficient to store one single precision number, the registers of the first plurality of registers being addressable in storing single precision numbers by sequentially numbered addresses and being addressable in storing double precision numbers by alternate ones of the sequential numbers used in storing single precision numbers; and a second plurality of registers, each of the registers of the second plurality of registers containing a number of bit positions at least sufficient to store one single precision number, the registers of the second plurality of registers being addressable in pairs in storing double precision numbers by those alternate ones of the sequential numbers used in storing single precision numbers omitted in addressing the registers of the first plurality of registers.

These and other objects and features of the invention will be better understood by reference to the detailed description which follows taken together with the drawings in which like elements are referred to by like designations throughout the several views.

## BRIEF DESCRIPTION OF THE DRAWINGS

Figure 1 is a diagram describing the registers of a floating point processor of the prior art.

Figure 2 is a diagram describing the registers of a floating point processor designed in accordance with the present invention.

## NOTATION AND NOMENCLATURE

Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like. It should be borne in mind, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary or desirable in most cases in any of the operations described herein which form part of the present invention; the operations are machine operations. Useful machines for performing the operations of the present invention include general purpose digital computers or other similar devices. In all cases the distinction between the method operations in operating a computer and the method of computation itself should be borne in mind. The present invention relates to apparatus for operating a computer in processing electrical or other (e.g. mechanical, chemical) physical signals to generate other desired physical signals.

## DETAILED DESCRIPTION OF THE INVENTION

As pointed out above, it is very desirable for floating point processors and other processors handling similar mathematical manipulations to be able to address a large number of registers. In the SPARC architecture, a floating-point processor includes thirty-two individual registers each capable of holding thirty-two bits of binary information. Each thirty-two bit register holds one single-precision operand. Since there are thirty-two individual registers, each single precision register is assigned an address from zero to thirty-one. There being thirty-two registers, register addresses require five bits.

To attain more precision in its arithmetic manipulations, a SPARC floating point processor (and other processors) uses more bit positions to store each number manipulated. A double precision operand has sixty-four bit positions and is held in two aligned floating point registers. Thus, a double precision number may be stored in registers zero and one, another in registers two and three, and so on. By aligning the registers, only one of the two registers need be addressed to select a particular double precision floating point number. This saves a great deal of space since it allows an instruction to address a double precision number using only five address bits. In a like manner, a quadruple precision operand has 128 bit positions and is held in four aligned floating point registers (e.g., registers zero, one, two, and three). By aligning the registers, only one of the four registers need be addressed to select a particular quadruple precision floating point number; and a similar saving in address space is accomplished.

Of course, since a single address is used to designate the two registers storing a double precision number and the four registers storing a quadruple precision number, the registers must always be addressed in the correct order. Were the registers to be selected in the wrong order, the number would have an incorrect meaning. Consequently, as a convention, the five bit address at which a double precision number is stored always has an even numbered address. For this reason, there can only be sixteen double precision registers. And in the same manner, each set of four registers which holds a quadruple precision number; and there can only be eight quadruple precision registers.

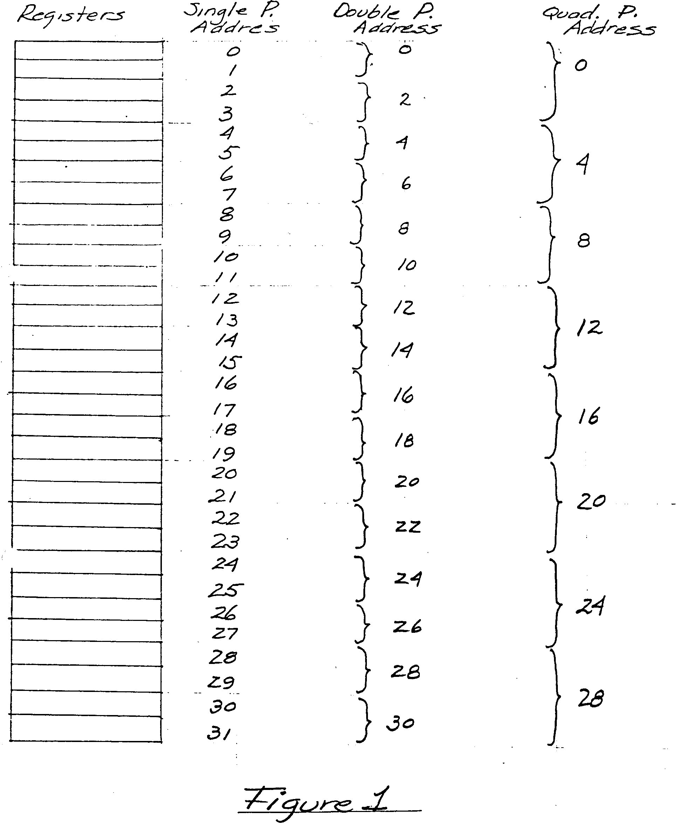

Figure 1 illustrates the arrangement of floating point registers in such a floating point processor. It will be noticed that the address of register zero is the address used to access a single precision number in register zero, a double precision number in registers zero and one, or a quadruple precision number in registers zero, one, two, and three. Although the numbers used in the figure are decimal, it will be appreciated by those skilled in the art that the actual address will be a binary number. The instruction itself designates the degree of precision of the number which is to be accessed in any case. For example, an instruction "fadds" indicates that single precision numbers are to be added; an instruction "faddd" indicates that double precision numbers are to be added; and an instruction "faddq" indicates that quadruple precision numbers are to be added.

It will be noted that in addressing double precision numbers using the typical addressing scheme, only even numbered addresses are used. Furthermore, in addressing quadruple precision numbers using the typical addressing scheme, only addresses divisible by four are used. Consequently, a number of addresses are unused for both double precision and quadruple precision arithmetic. The unused addresses, of course, designate single precision register positions which are conventionally unavailable to the double and quadruple precision processes.

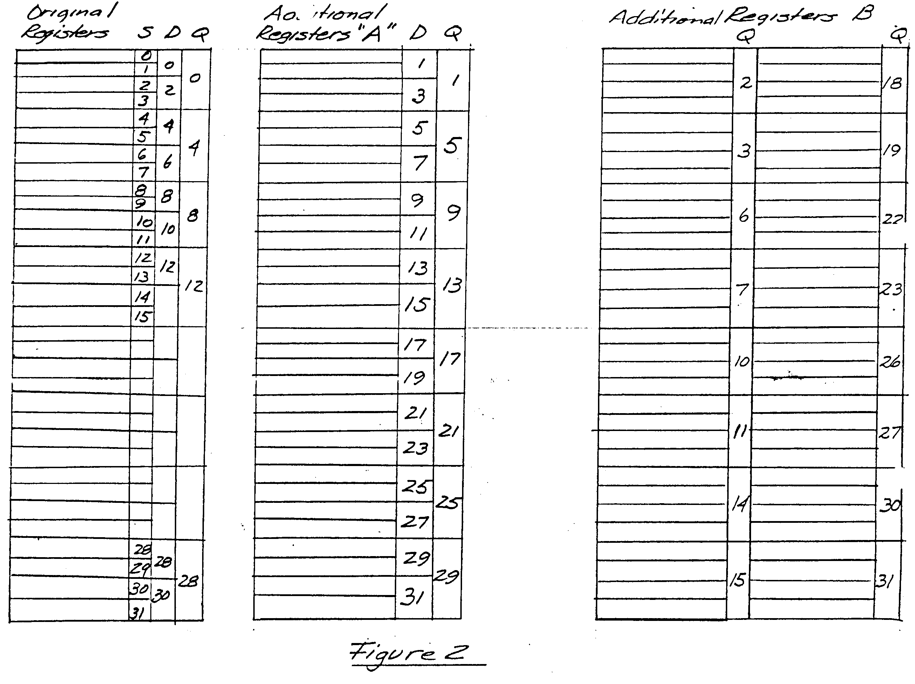

Consequently, since the instruction itself includes the information regarding the precision involved, these addresses which are unused with double and quadruple precision numbers may be used to address additional registers. Figure 2 illustrates an arrangement in which thirty-two additional thirty-two bit registers designated A are added. Pairs of these registers may be given the odd numbered addresses omitted from the normal addressing scheme for double precision registers. Thus, an additional sixteen double precision registers are provided for use by the floating point processor. When the instruction indicates that a double precision operation is involved, then these odd numbered addresses designate the additional registers rather than the odd numbered single precision registers.

It will be realized that the same additional registers A may also be used to store quadruple precision numbers without any conflict in addresses. Thus, the added registers may be addressed using every other odd numbered address when the instruction indicates that a quadruple precision operation is involved.

It will also now be apparent to those skilled in the art that sixty-four additional thirty-two bit registers designated B may be added to the register file and used for additional quadruple registers without any conflict in addresses. When the instruction indicates that a quadruple precision operation is involved, then the addresses shown adjacent the additional registers B designate the additional registers B rather than the odd numbered single precision registers or the double precision registers in registers A.

In this manner, a total of thirty-two single precision registers, thirty-two double precision registers, and thirty-two quadruple precision registers may be addressed by a floating point processor. The arrangement may be extended to systems using octuple and greater precision with the same effect. The addressing arrangement may be applied to systems using other numbers of registers in floating point processors. Moreover, it is also possible to utilize the arrangement of the invention with processors other than floating point registers which manipulate numbers. For example, integer processors conduct a great number of mathematical operations and could benefit from the arrangement.

Although the present invention has been described in terms of a preferred embodiment, it will be appreciated that various modifications and alterations might be made by those skilled in the art without departing from the spirit and scope of the invention. The invention should therefore be measured in terms of the claims which follow.

## Claims

1. A processor capable of manipulating numbers comprising a first plurality of registers, each of the registers of the first plurality of registers containing a number of bit positions at least sufficient to store one single precision number, the registers of the first plurality of registers being addressable when storing single precision numbers by sequentially numbered addresses and being addressable when storing double precision numbers by alternate ones of the sequential numbers used in storing single precision numbers; and a second plurality of registers, each of the registers of the second plurality of registers containing a number of bit positions at least sufficient to store one single precision number, the registers of the second plurality of registers being addressable in pairs when storing double precision numbers by those alternate ones of the sequential numbers used in storing single precision numbers omitted in addressing the registers of the first plurality of registers when storing double precision numbers.

2. A processor capable of manipulating numbers as claimed in Claim 1 in which the registers of the first plurality of registers are addressable when storing quadruple precision numbers in sets of four registers by every fourth one of the sequential numbers used in storing single precision numbers; and in which the registers of the second plurality of registers are each addressable when storing quadruple precision numbers in sets of four registers by alternate ones of the numbers used in storing double precision numbers in addressing the registers of the second plurality of registers.

3. A processor capable of manipulating numbers as claimed in Claim 2 further comprising a third plurality of registers addressable for storing quadruple precision numbers in sets of four registers by those alternate ones of the sequential numbers used in storing single precision numbers omitted in addressing the registers of the first and second plurality of registers when storing quadruple precision numbers.

4. A processor capable of manipulating numbers comprising a first plurality of registers, each of the registers of the first plurality of registers containing a number of bit positions at least sufficient to store one single precision number, the registers of the first plurality of registers being addressable when storing single precision numbers by sequentially numbered addresses and being addressable when storing double precision numbers by alternate ones of the sequential numbers used in storing single precision numbers; and a second plurality of registers, each of the registers of the second plurality of registers containing a number of bit positions at least sufficient to store one double precision number, the registers of the second plurality of registers being addressable when storing double precision numbers by those alternate ones of the sequential numbers used in storing single precision numbers omitted in addressing the registers of the first plurality of registers.

5. A processor capable of manipulating numbers as claimed in Claim 4 in which the registers of the first plurality of registers are addressable when storing quadruple precision numbers in sets of four registers by every fourth one of the sequential numbers used in storing single precision numbers; and in which the registers of the second plurality of registers are each addressable when storing quadruple precision numbers in sets of registers by alternate ones of the numbers used in storing double precision numbers in addressing the registers of the second plurality of registers.

6. A processor capable of manipulating numbers as claimed in Claim 5 further comprising a third plurality of registers addressable for storing quadruple precision numbers in sets of registers by those alternate ones of the sequential numbers used in storing single precision numbers omitted in addressing the registers of the first and second plurality of registers when storing quadruple precision numbers.

Figure 1

Original Registers    S  D  Q

Additional Registers "A"  D  Q

Additional Registers  B
Q                     Q

| S | D | Q |
|---|---|---|
| 0 | 0 |   |
| 1 |   | 0 |
| 2 | 2 |   |
| 3 |   |   |
| 4 | 4 |   |
| 5 |   | 4 |
| 6 | 6 |   |
| 7 |   |   |
| 8 | 8 |   |
| 9 |   | 8 |
| 10 | 10 |   |
| 11 |   |   |
| 12 | 12 |   |
| 13 |   | 12 |
| 14 |   |   |
| 15 |   |   |
| 28 | 28 |   |
| 29 |   | 28 |
| 30 | 30 |   |
| 31 |   |   |

Additional Registers "A": D — 1, 3, 5, 7, 9, 11, 13, 15, 17, 19, 21, 23, 25, 27, 29, 31; Q — 1, 5, 9, 13, 17, 21, 25, 29

Additional Registers B: Q — 2, 3, 6, 7, 10, 11, 14, 15; Q — 18, 19, 22, 23, 26, 27, 30, 31

Figure 2